# EUROPÄISCHE PATENTSCHRIFT

(11) **EP 1 623 434 B1**
(45) Veröffentlichungstag und Bekanntmachung des Hinweises auf die Patenterteilung: **17.10.2007**
(21) Anmeldenummer: 04739153.7
(22) Anmeldetag: 07.05.2004
(51) Int. Cl.: G21C 15/16

(54) **REAKTORDRUCKBEHÄLTER EINES SIEDEWASSERREAKTORS UND VERFAHREN ZUR DAMPF-WASSER-SEPARATION IN EINEM REAKTORDRUCKBEHÄLTER EINES SIEDEWASSERREAKTORS**
REACTOR PRESSURE VESSEL FOR A BOILING WATER REACTOR AND METHOD FOR SEPARATING WATER FROM WATER STEAM IN SAID PRESSURE VESSEL OF THE BOILING WATER REACTOR
CUVE SOUS PRESSION D'UN REACTEUR A EAU BOUILLANTE ET PROCEDE POUR SEPARER L'EAU DE LA VAPEUR D'EAU DANS LA CUVE SOUS PRESSION D'UN REACTEUR A EAU BOUILLANTE

(30) Priorität: 08.05.2003 DE 10320819
(43) Veröffentlichungstag der Anmeldung: 08.02.2006
(73) Patentinhaber: AREVA NP GmbH, 91058 Erlangen (DE)
(72) Erfinder: KOLEV, Nikolay, 91074 Herzogenaurach (DE)
(74) Vertreter: Walkenhorst, Andreas
(86) Internationale Anmeldenummer: PCT/EP2004/004926
(87) Internationale Veröffentlichungsnummer: WO 2004/100172

(56) Entgegenhaltungen:
- EP-A- 0 418 072
- WO-A-98/24093
- US-A- 5 106 573
- US-A- 5 857 006

## Beschreibung

Die Erfindung betrifft einen Reaktordruckbehälter eines Siedewasserreaktors, bei dem oberhalb eines Reaktorkerns eine Abscheideeinrichtung zur Dampf-Wasser-Separation vorgesehen ist. Die Erfindung betrifft weiterhin ein Verfahren zur Dampf-Wasser-Separation in einem solchen Reaktordruckbehälter.

Bei einem Siedewasserreaktor werden im Reaktordruckbehälter das durch den Reaktorkern strömende Kühlwasser erhitzt. Das Kühlwasser tritt dabei teilweise in die Dampfphase über, so dass ein Gemisch aus Dampf und Wasser aus dem Reaktorkern ausströmt. Bevor der Dampf zur Erzeugung von elektrischer Energie einer Dampfturbine zugeführt wird, wird der Dampf von dem Wasser mit Hilfe der Abscheideeinrichtung abgetrennt.

Aus der WO 99/08287 ist eine solche Abscheideeinrichtung zu entnehmen, welche eine Mehrzahl von Separatoren aufweist, die sich an einem oberen Kerngitter des Reaktorkerns abstützen, so dass das aus dem Reaktorkern ausströmende Dampf-Wasser-Gemisch unmittelbar in die Separatoren eingeleitet wird. In Strömungsrichtung nach den Separatoren sind den einzelnen Separatoren Trockner nachgeschaltet, welche Prall- oder Umlenkbleche aufweisen. Im Separator wird das Dampf-Wasser-Gemisch nach Art eines Zyklons in eine Rotation versetzt, so dass sich die schweren Wasserteilchen im Außenbereich und der wasserarme Dampf im Zentralbereich ansammelt. Der wasserarme Dampf wird anschließend den Trocknern zugeführt und weist beim Austritt aus diesen lediglich einen Restwasser-Masseanteil von 0,01 % bis 0,02% auf.

Im Siedewasserreaktor von US 5 857 006 ist zwischen Abscheideeinrichtung und 04739153 Reaktorkern ein in seinem Querschnitt sich verjüngender und sich wieder vergrößernder zylindrischer Kamin angeordnet. Oberhalb der Abscheideeinrichtung befindet sich eine Trocknungseinrichtung.

Durch die bei einem Siedewasserreaktor notwendige Dampf-Wasser Separation innerhalb des Reaktordruckbehälters mit dem zweistufigen Aufbau bestehend aus einer Zyklon- oder Separatoreinrichtung und einer diesen in Strömungsrichtung nachgeschalteten Trocknungseinrichtung ist insgesamt eine sehr große Bauhöhe des Reaktordruckbehälters damit auch eines Sicherheitsbehälters (Containment), in dem der Reaktordruckbehälter angeordnet ist, erforderlich. Aufgrund der hohen Sicherheitsstandards des Sicherheits- sowie des Reaktordruckbehälters sind mit der großen Bauhöhe auch erhebliche Kosten verbunden.

Der Erfindung liegt die Aufgabe zugrunde, einen Reaktordruckbehälter mit einer geringen Bauhöhe zu ermöglichen.

Die Aufgabe wird gemäß der Erfindung gelöst durch einen Reaktordruckbehälter nach Anspruch 1 und einem Verfahren nach Anspruch 5.

Da aufgrund der Vorab-Trennung in den Randbereichen bereits ein wasserarmes Gemisch vorliegt ist vorgesehen, dass nur im zentralen Bereich eine Separator- oder Zykloneinrichtung angeordnet ist. Bei dieser erfolgt die Separation des wasserreichen Gemisches wie üblich durch den Aufbau einer Drall- oder Rotationsströmung, so dass sich in dem jeweiligen Zyklon oder Separator ein umlaufender Flüssigkeitsring bildet, der einen zentralen, wasserarmen Dampfbereich umgibt. Das Wasser des Flüssigkeitsring verbleibt im Reaktordruckbehälter, während der wasserarme Dampfbereich nach einer weiteren Trennstufe zu einer Dampfturbine geleitet wird. Die Zykloneinrichtung kann hierbei mehrere Zyklone aufweisen. Die Anwendung der Zyklone in nur einem zentralen Teilbereich führt zu geringen Kosten.

Im Ringraum um die zentral angeordnete Zykloneinrichtung ist eine Trocknungseinrichtung angeordnet. Da in den Randbereichen aufgrund der Vorab-Trennung bereits ein wasserarmes Gemisch vorliegt, ist in diesem Randbereich die Anordnung lediglich einer Trocknungseinrichtung, die mehrere Trockner umfassen kann, ausreichend. In diesem Randbereich ist daher eine zweistufige Separation durch vorgeschaltetem Zyklon und nachgeschaltetem Trockner nicht erforderlich. Die erste Stufe der Separation wird vielmehr durch die Vorab-Trennung durch die Querschnittsvergrößerung vor der Abscheideeinrichtung errreicht.

Im Hinblick auf die gewünschte Reduzierung der Bauhöhe des Reaktordruckbehälters ist von besonderem Vorteil, wenn die Trocknungseinrichtung ausschließlich neben der Zykloneinrichtung angeordnet ist und das aus dem Zyklon austretende Dampf-Wasser-Gemisch über die randseitig angeordnete Trocknungseinrichtung geführt wird. Bei dieser Ausgestaltung ist daher oberhalb der Zykloneinrichtung kein weiterer Trockner vorgesehen. Die Bauhöhe des Reaktordruckbehälters wird also beispielsweise durch die obere Höhe der Zykloneinrichtung bestimmt.

Im Hinblick auf eine besonders effiziente Abscheidung umfasst die Trocknungseinrichtung bevorzugt eine erste Trocknereinheit für das aus der Zykloneinrichtung austretende Dampf-Wasser-Gemisch und eine zweite Trocknereinheit für das sonstige Dampf-Wasser-Gemisch, welches aus dem Durchgang in die Randbereiche strömt. Durch diese Maßnahme können durch unterschiedliche Auslegung der beiden Trocknereinheiten Unterschiede im Wasseranteil des Gemisches berücksichtigt werden, um eine möglichst hohe Abscheidequote zu erzielen.

Zweckdienlicherweise ist dabei die erste Trocknereinheit zwischen der Zykloneinrichtung und der zweiten Trocknereinheit angeordnet. In die erste Trocknereinheit wird dabei insbesondere über geeignete Umlenkbleche das aus der Zykloneinrichtung austretende Gemisch eingeleitet. Nach Verlassen der Trocknungseinrichtung strömt der dann trockene Dampf zu einem Dampfaustrittsstutzen, an dem im Betrieb eine zu einer Turbine führende Dampfleitung angeschlossen ist.

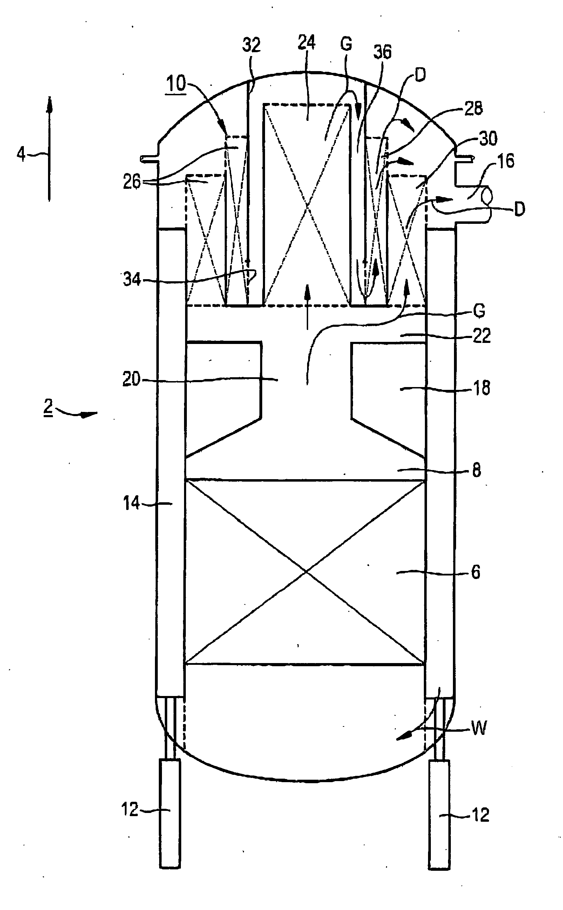

Ein Ausführungsbeispiel der Erfindung wird im Folgenden anhand der einzigen Zeichnung näher erläutert, die eine grob vereinfachte Darstellung eines Reaktordruckbehälters eines Siedewasserreaktors zeigt.

Der Reaktordruckbehälter 2 erstreckt sich entlang einer Längsrichtung 4. Im unteren Drittel ist ein Reaktorkern 6 angeordnet, an den sich ein Strömungsraum 8 und daran wiederum eine Abscheideeinrichtung 10 anschließen. Beim Betrieb des Reaktors wird über Kühlmittelumwälzpumpen 12 Kühlwasser W aus einem äußeren Randbereich 14 dem zentral angeordneten Reaktorkern 6 von unten zugeführt, durchströmt diesen und verlässt den Reaktorkern 6 als Dampf-Wasser-Gemisch G. Das Gemisch G durchströmt die Abscheideeinrichtung 10 und verlässt diese als trockener Dampf D in Richtung zu einem Dampfaustrittsstutzen 16.

Im Strömungsraum 8 ist ein ringförmiges Bauelement 18 mit einem zentralen Durchgang 20 angeordnet. Vom Reaktorkern 6 aus verjüngt sich der Durchgang 20 in Längsrichtung 4 kontinuierlich und insbesondere stetig. Das ringförmige Bauelement 18 ist in diesem Bereich also z.B. konisch verjüngend ausgebildet. Hierdurch wird die Strömungsquerschnittsfläche stetig verringert. Die maximale Strömungsquerschnittsfläche entspricht dabei in etwa der Innenquerschnittsfläche einer Kernumfassung, die die Fläche innerhalb der äußeren Randbereiche 14 umgibt. Diese maximale Strömungsquerschnittsfläche wird im Bereich des Durchgangs 20 auf eine minimale Strömungsquerschnittsfläche reduziert. Nach dem Durchgang 20 verbreitert sich die Strömungsquerschnittsfläche wieder abrupt auf die maximale Strömungsquerschnittsfläche.

Aufgrund der plötzlichen Querschnittserweiterung erfolgt eine erste Phasentrennung zwischen Wasser und Dampf, wobei wegen der größeren Trägheit der schweren Wasserteilchen diese der abrupten Querschnittsveränderung weniger folgen als die leichten und damit weniger trägen Dampfanteile. Vor dem Eintritt des Gemisches G in die Abscheideeinrichtung 10 ist daher bereits eine erste Phasentrennung erfolgt, wobei im zentralen, sich an den Durchgang 20 anschließenden Bereich ein wasserreiches Gemisch und im Randbereich 22 ein wasserarmes Gemisch vorhanden ist. Diese erste Phasentrennung aufgrund der unterschiedlichen Trägheiten wird da hingehend ausgenutzt, dass die nachfolgenden Komponenten der Abscheideeinrichtung 10 an diese unterschiedlichen Verhältnisse angepasst sind. Und zwar ist lediglich im zentralen Bereich eine Zykloneinrichtung 24 vorgesehen, die ringförmig von einer Trocknungseinrichtung 26 umgeben ist. Letztere weist eine erste Trocknereinheit 28 sowie eine zweite Trocknereinheit 30 auf, die die erste Trocknereinheit 28 zwischen sich und der Zykloneinrichtung 24 einschließt.

Aufgrund der Vorab-Trennung ist das Gemisch G im Randbereich 22 bereits ausreichend trocken, so dass an dieser Stelle ein Zyklon nicht mehr erforderlich ist. Eine ausreichende Dampftrocknung wird hier bereits durch die ausschließliche Anordnung der Trocknungseinrichtung 26 erreicht. Sowohl die Trocknungseinrichtung 26 als auch die Zykloneinrichtung 24 können eine Vielzahl von einzelnen Trocknern bzw. Zyklonen aufweisen. Gleiches gilt auch für die erste und zweite Trocknereinheit 28,30, die ebenfalls aus einer Mehrzahl von einzelnen Trocknern gebildet sein können. Nach Durchströmen der zweiten Trocknereinheit 30 erreicht der trockene Dampf unmittelbar den Dampfaustrittsstutzen 16.

Das die Zykloneinrichtung 24 durchströmende Gemisch G wird ausgangsseitig am oberen Ende der Zykloneinrichtung 24 durch ein Leitblech 32 entgegengesetzt zur Längsrichtung geführt und über eine Eintrittsöffnung 34 der ersten Trocknereinrichtung 28 zugeleitet. Hier wird das Gemisch G wiederum umgeleitet und durchströmt die erste Trocknereinheit 28 in Längsrichtung 4, verlässt diese als trockener Dampf D und wird zusammen mit dem aus der zweiten Trocknereinheit 30 austretenden Dampf D dem Dampfaustrittsstutzen 16 zugeführt.

Das Leitblech 32 ist nach Art eines Hohlzylinders ausgebildet, welcher die Zykloneinrichtung 24 konzentrisch unter Freilassung eines Strömungswegs 36 umgibt. Die Trocknereinrichtung 26 und die Zykloneinrichtung 24 sind mit ihren Eingangsseiten jeweils auf gleicher Höhe ausgerichtet. Dabei weist die Zykloneinrichtung 24 sowie die zweite Trocknereinheit 30 jeweils einen zum Strömungsraum 8 hin orientierten Einlass für das Gemisch G auf. Der Einlass in die erste Trocknereinheit 28 erfolgt ausschließlich von Seiten des Strömungswegs 36 über die Eintrittsöffnung 34. Zum Strömungsraum 8 hin sind der Strömungsweg 36 sowie die erste Trocknereinheit 28 verschlossen. Anstelle dieser geschlossenen Ausführung sind in einer alternativen hier nicht dargestellten Ausgestaltung der Strömungsweg 36 sowie die erste Trocknereinheit 28 zum Strömungsraum 8 hin offen, so dass das die Zykloneinrichtung 24 verlassende Gemisch G über den Strömungsraum 8 in die Trocknungseinrichtung 26 eintritt. Auch braucht die Trocknungseinrichtung 26 nicht zwingend in unterschiedliche Trocknereinheiten unterteilt zu sein. Die Unterteilung hat jedoch den Vorteil, dass die unterschiedlichen Trocknereinheiten 28,30 auf unterschiedliche Wassergehalte der sie durchströmenden Gemische G durch entsprechende konstruktive Maßnahmen, beispielsweise unterschiedliche Bauhöhen, eingestellt sind. Dadurch wird eine hohe Abscheidequote gewährleistet. Da aufgrund der Vorab-Trennung im Strömungsraum 8 das Gemisch im Randbereich 22 nahe zum äußeren Randbereich 14 am trockensten ist, besteht weiterhin die Möglichkeit, eine weitere Differenzierung der Trocknungseinrichtung 26 vorzunehmen und beispielsweise eine dritte Trocknereinheit vorzusehen, die am äußeren Rand für das bereits weitgehend trockene Gemisch G vorgesehen ist.

Durch die insbesondere plötzliche Querschnittserweiterung im Strömungsraum 8 wird das unterschiedlich träge Verhalten von Wasser und Dampf zu einer ersten Phasentrennung dahingehend vorteilhaft ausgenutzt, dass die nachfolgenden Komponenten an die Vorab-Trennung angepasst werden. Entscheidend ist hierbei, dass lediglich noch im zentralen Bereich die Zykloneinrichtung 24 erforderlich ist. Dadurch ist im Ringraum um die Zykloneinrichtung 24 ein Bauraum frei, welcher für die Anordnung der Trocknungseinrichtung 26 genutzt wird, und zwar insbesondere dahingehend, dass die Trocknungseinrichtung 26 ausschließlich in diesem Ringraum neben der Zykloneinrichtung 24 angeordnet ist. Damit entfällt also die bisher übliche Anordnung der Trocknungseinrichtung 26 - in Längsrichtung 4 gesehen - oben auf der Zykloneinrichtung, so dass insgesamt eine Reduzierung der Bauhöhe des Reaktordruckbehälters erzielt wird.

### Bezugszeichenliste

- 2: Reaktordruckbehälter
- 4: Längsrichtung
- 6: Reaktorkern
- 8: Stauraum
- 10: Abscheideeinrichtung
- 12: Kühlmittelumwälzpumpe
- 14: äußerer Randbereich
- 16: Dampfaustrittsstutzen
- 18: Bauelement
- 20: Durchgang
- 22: Randbereich
- 24: Zykloneinrichtung
- 26: Trocknungseinrichtung
- 28: erste Trocknereinheit
- 30: zweite Trocknereinheit
- 32: Leitblech
- 34: Eintrittsöffnung
- 36: Strömungsweg

- D: Dampf
- G: Gemisch
- W: Kühlwasser

## Patentansprüche

1. Reaktordruckbehälter (2) eines Siedewasserreaktors, bei dem oberhalb eines Reaktorkerns (6) eine Abscheideeinrichtung (10) zur Dampf-Wasser Separation vorgesehen ist und zwischen dem Reaktorkerns (6) und der Abscheideeinrichtung (10) ein Strömungsraum (8) vorhanden ist in dem ein ringförmiges Bauelement (18) angeordnet ist durch das die Strömungsquerschnittsfläche zunächst verkleinert und anschließend wieder vergrößert wird, und das Bauelement (18) einen zentralen, den Strömungsquerschnitt definierenden Durchgang (20) aufweist,
**dadurch gekennzeichnet,**
**daß** nur in einem dem zentralen Durchgang (20) in Strömungsrichtung nachgeordnetem Raumbereich eine Zykloneinrichtung (24) angeordnet ist und die Zykloneinrichtung (24) ringförmig von einer Trocknungseinrichtung (26) umgeben ist.

2. Reaktordruckbehälter (2) nach Anspruch 1,
**dadurch gekennzeichnet,**
**dass** ausgangsseitig von der Zykloneinrichtung (24) zu einem Dampfaus-trittsstutzen (16) ein Strömungsweg (36) ausschließlich über die Trocknungseinrichtung (26) gegeben ist.

3. Reaktordruckbehälter (2) nach Anspruch 1 oder 2,
**dadurch gekennzeichnet,**
**dass** die Trocknungseinrichtung (26) eine erste Trocknereinheit (28) für ein aus der Zykloneinrichtung austretenden Dampf-Wasser-Gemisch (G) und eine zweite Trocknereinheit (30) für das sonstige Dampf-Wasser-Gemisch (G) aufweist.

4. Reaktordruckbehälter (2) nach Anspruch 3,
**dadurch gekennzeichnet,**
**dass** die erste Trocknereinheit (28) zwischen der Zykloneinrichtung (24) und der zweiten Trocknereinheit (30) angeordnet ist.

5. Verfahren zur Dampf-Wasser Separation in einem Reaktordruckbehälter (2) eines Siedewasserreaktors, wobei ein aus einem Reaktorkern (6) austretendes Dampf-Wasser-Gemisch (G) durch einen Strömungsraum (8) mit einer sich zunächst verkleinernden und anschließend wieder vergrößernden Strömungsquerschnittsfläche in eine Abscheideeinrichtung (10) geführt wird, wobei ein wasserreiches Gemisch in einem Zentralbereich des Strömungsraums und ein wasserarmes Gemisch in einem Randbereich des Strömungsraums entsteht,
**dadurch gekennzeichnet,**
**daß** das Dampf-Wasser-Gemisch (G) ausschließlich aus dem Zentralbereich des Strömungsraums (8) einer nachfolgenden Zykoneinrichtung (24) zugeführt wird und das Dampf-Wasser-Gemisch (G) im Randbereich des Strömungsraumes (8) einer ringförmig um die Zykoneinrichtung (24) angeordneten Trocknungseinrichtung (26) zugeführt wird.

## Claims

1. Reactor pressure vessel (2) of a boiling water reactor, in which a separation device (10) for steam/water separation is provided above a reactor core (6) and between the reactor core (6) and the separation device (10) there is a flow space (8), in which is arranged an annular component (18), which initially reduces the flow cross-sectional area and then increases it again, and the component (18) has a central passage (20) which defines the cross section of flow,
**characterized**
**in that** a cyclone device (24) is arranged only in a spatial region arranged downstream of the central passage (20), as seen in the direction of flow, and the cyclone device (24) is surrounded in ring form by a drying device (26).

2. Reactor pressure vessel (2) according to Claim 1, **characterized in that** on the exit side the only flow path (36) from the cyclone device (24) to a steam outlet connection piece (16) is via the drying device (26).

3. Reactor pressure vessel (2) according to Claim 1 or 2, **characterized in that** the drying device (26) has a first dryer unit (28) for a steam/water mixture (G) emerging from the cyclone device and a second dryer unit (30) for the rest of the steam/water mixture (G).

4. Reactor pressure vessel (2) according to Claim 3, **characterized in that** the first dryer unit (28) is arranged between the cyclone device (24) and the second dryer unit (30).

5. Method for steam/water separation in a reactor pressure vessel (2) of a boiling water reactor, wherein a steam/water mixture (G) which emerges from a reactor core (6) is passed into a separation device (20) through a flow space (8) with a cross-sectional area which initially decreases and then increases again, wherein a water-rich mixture is formed in a central region of the flow space and a low-water mixture is formed in an edge region of the flow space,
**characterized**
**in that** the steam/water mixture (G) is only fed to a downstream cyclone device (24) from the central region of the flow space (8), and the steam/water mixture (G) in the edge region of the flow space (8) is fed to a drying device (26) arranged in a ring around the cyclone device (24).

## Revendications

1. Cuve (2) sous pression d'un réacteur à eau bouillante, dans laquelle est prévu un dispositif (10) de séparation vapeur-eau au-dessus d'un coeur (6) de réacteur et il y a entre le coeur (6) du réacteur et le dispositif (10) de séparation un espace (8) d'écoulement, dans lequel est disposé un élément (18) annulaire par lequel la surface de la section transversale d'écoulement est d'abord rapetissée et ensuite réagrandie et l'élément (18) a un passage (20) central définissant la section transversale d'écoulement,
**caractérisée**
**en ce qu'**un dispositif (24) à cyclone est disposé seulement dans une partie de l'espace en aval, dans le sens du courant, du passage (20) central et le dispositif (24) à cyclone est entouré annulairement d'un dispositif (26) de séchage.

2. Cuve (2) sous pression de réacteur suivant la revendication 1,
**caractérisée**
**en ce que** du côté de la sortie du dispositif (24) à cyclone vers une tubulure (16) de sortie de la vapeur, il y a un trajet (36) d'écoulement exclusivement par le dispositif (26) de séchage.

3. Cuve (2) sous pression de réacteur suivant la revendication 1 ou 2,
**caractérisée**
**en ce que** le dispositif (26) de séchage a une première unité (28) de sécheur pour un mélange (G) vapeur-eau sortant du dispositif à cyclone et une deuxième unité (30) de sécheur pour le reste du mélange (G) vapeur-eau.

4. Cuve (2) sous pression de réaction suivant la revendication 3,
**caractérisée**
**en ce que** la première unité (28) de sécheur est disposée entre le dispositif (24) à cyclone et la deuxième unité (30) de sécheur.

5. Procédé de séparation vapeur-eau dans une cuve (2) sous pression d'un réacteur à eau bouillante, dans lequel on envoie dans un dispositif (6) de séparation un mélange (G) vapeur-eau sortant d'un coeur (6) de réacteur en le faisant passer par un espace (8) d'écoulement ayant une surface de section transversale d'écoulement qui se rapetisse d'abord et qui se réagrandie ensuite, un mélange riche en eau étant produit dans une partie centrale de l'espace d'écoulement et un mélange pauvre en eau dans une partie marginale de l'espace d'écoulement
**caractérisé**
**en ce que** l'on envoie à un dispositif (24) à cyclone venant ensuite le mélange (G) vapeur-eau provenant exclusivement de la partie centrale de l'espace (8) d'écoulement et on envoie le mélange (G) vapeur-eau de la partie marginale de l'espace (8) d'écoulement à un dispositif (26) de séchage disposé annulairement autour du dispositif (24) à cyclone.
